# EUROPÄISCHE PATENTSCHRIFT

(11) **EP 3 272 462 B1**
(45) Veröffentlichungstag und Bekanntmachung des Hinweises auf die Patenterteilung: **19.06.2019**
(21) Anmeldenummer: 17181389.2
(22) Anmeldetag: 14.07.2017
(51) Int. Cl.: B25B 23/00, B25B 29/02, B23P 19/06, G01B 21/02, G01B 21/16

(54) **SPANNVORRICHTUNG ZUM DEHNEN EINES GEWINDEBOLZENS**
CLAMPING DEVICE FOR STRETCHING A THREADED BOLT
DISPOSITIF DE SERRAGE POUR L'ETIREMENT D'UN BOULON FILETE

(30) Priorität: 18.07.2016 DE 102016113196
(43) Veröffentlichungstag der Anmeldung: 24.01.2018
(73) Patentinhaber: Hohmann, Frank, 59581 Warstein (DE); Hohmann, Jörg, 59872 Meschede (DE)
(72) Erfinder:
(74) Vertreter: Bungartz Christophersen Partnerschaft mbB Patentanwälte

(56) Entgegenhaltungen:
- EP-A2- 2 679 336
- EP-A2- 2 687 320
- WO-A2-2006/105931
- US-A- 5 257 207

## Beschreibung

Die Erfindung betrifft eine Spannvorrichtung zum Dehnen eines Gewindebolzens durch Zug an dessen Gewindeendabschnitt, mit einem den Gewindeendabschnitt umgebenden Stützrohr, einem in Verlängerung des Stützrohrs angeordneten Zylinder mit mindestens einem darin axial mittels hydraulischer Kräfte bewegbaren Kolben, einer mit dem Gewindeendabschnitt verschraubbaren, durch den Kolben axial mitnehmbar ausgebildeten Wechselbuchse, einer Hydraulikeinrichtung zur hydraulischen Versorgung des Kolbens, und einer Signalverbindung zwischen der Hydraulikeinrichtung und einer Einrichtung zum Erfassen der Größe des Gewindeeingriffs zwischen der Wechselbuchse und dem Gewindeendabschnitt.

Aus dem Stand der Technik sind Spannvorrichtungen zum Dehnen von Gewindebolzen bekannt. Die in der US 5,452,629 offenbarte Spannvorrichtung beinhaltet eine Messanordnung zur Bestimmung der Zugspannung. Die Messanordnung besteht im Wesentlichen aus aneinandergereihten, mit dem Gewindeendabschnitt des zu spannenden Bolzens in Kontakt stehenden Messstäben, welche sich in vertikaler Richtung entlang der Wechselbuchse fortsetzen. Der unterste, mit dem Gewindebolzen in Kontakt stehende Messstab ist mit einem zweiten Messstab verbunden. Der zweite Messstab besitzt eine radiale Erweiterung, an welcher sich eine Feder abstützt und die Messanordnung in Richtung des Bolzens vorspannt. Am oberen Ende der Messanordnung befindet sich in unmittelbarer Nähe zu den Messstäben ein Sensor vom Typ eines linearen Potentiometers, eines induktiven oder eines optoelektronischen Sensors. Ein die Messstäbe umgebendes Rohr bzw. eine Hülse führt ein Kabel bis zum oberen Ende der Spannvorrichtung. Die Variation des elektrischen Widerstandes wird detektiert und ist proportional zur Zugspannung. Diese kann an einer mit dem Kabel verbundenen Anzeigeeinheit dargestellt werden. Über die so ermittelte Zugspannung kann die Versorgung der Zylinder bzw. Kolbeneinrichtung mit hydraulischem Fluid gesteuert werden.

Aus der WO 2010/054959 A1 ist eine Spannvorrichtung bekannt, bei der ein Messstab mit seinem unteren Ende auf der Stirnseite des zu spannenden Gewindebolzens aufsitzt. Der Stab ist gegenüber der den Bolzen umgreifenden Wechselbuchse längsverschieblich, was von außen gut sichtbar ist. Auf diese Weise kann optisch kontrolliert werden, ob die Einschraubtiefe des Bolzens in die Wechselbuchse ausreichend ist.

Die DE 10 2005 015 922 A1 zeigt eine Ausführungsform, bei der nicht die Relativverschiebung eines Messstabes erfasst wird, sondern der Abstand zwischen dem Bolzen und einem zum Bolzen beabstandeten aber positionsfesten Sensorelement. Die Wechselbuchse ist gegenüber dem Sensorelement verschiebbar. Es wird folglich ein Abstand zwischen dem Sensorelement und Bolzen relativ zur Wechselbuchse erfasst. Eine weitere Spannvorrichtung ist aus EP 2 687 320 A2 bekannt.

Die aus dem Stand der Technik bekannten Messanordnungen zur Messung der Zugspannung bzw. der Zugspannung proportionalen Messparametern basieren auf der relativen Verschiebung zwischen der Wechselbuchse und dem Messinstrument. Eine solche Konstruktion bedarf eines relativ hohen Konstruktionsaufwandes, da es einer exakten Abstimmung zwischen Bolzen, Messanordnung und Wechselbuchse bedarf. Hierzu muss die Messanordnung gleitend innerhalb der Spannvorrichtung geführt oder gelagert sein. Zudem muss die Messanordnung an zumindest einer Seite außerhalb der Wechselbuchse befestigt sein, um ein Mitgleiten mit der Wechselbuchse zu verhindern. Des Weiteren muss der Sensor mechanisch stabil oder anderweitig gegen äußere mechanische Belastungen geschützt sein. Dies führt zu erheblichem Konstruktionsaufwand.

Bei den aus dem Stand der Technik bekannten Spannvorrichtungen mit Sensoranordnungen, die in direktem Kontakt mit dem zu spannenden Bolzen stehen, kann es zu starken mechanischen Beanspruchungen des Sensors kommen. All diesen Vorrichtungen ist gemein, dass aus den Messdaten zwar die Zugspannung berechnet werden kann, nicht aber unmittelbar der Gewindeeingriff.

Der Erfindung liegt die Aufgabe zugrunde, eine Spannvorrichtung zum Dehnen eines Gewindebolzens durch Zug an dessen Gewindeendabschnitt zu schaffen, die ein kontaktloses Messen der Größe des Gewindeeingriffs zwischen Wechselbuchse und dem zu spannenden Bolzen ermöglicht. Zudem soll eine solche Spannvorrichtung den Gewindeeingriff präzise, materialschonend und mit erhöhter Betriebssicherheit messen.

Zur **Lösung** dieser Aufgabe wird eine Spannvorrichtung zum Dehnen eines Gewindebolzens mit den in Patentanspruch 1 angegebenen Merkmalen vorgeschlagen.

Bei einer solchen Spannvorrichtung ist der Gewindeendabschnitt des zu spannenden bzw. zu dehnenden Gewindebolzens von einem Stützrohr der Spannvorrichtung umgeben. In Verlängerung des Stützrohrs ist ein Zylinder angeordnet, der mit mindestens einem innerhalb des Zylinders mittels hydraulischer Kräfte axial bewegbaren Kolben versehen ist. Die hydraulische Versorgung des Kolbens wird über eine Hydraulikeinrichtung vollzogen. Bei seinen Axial- bzw. Vertikalbewegungen nimmt der Kolben eine mit dem Gewindeendabschnitt verschraubbare Wechselbuchse axial mit. Weiterer Bestandteil der Spannvorrichtung ist eine Einrichtung zum Erfassen des Gewindeeingriffs zwischen der Wechselbuchse und dem Gewindeendabschnitt des Gewindebolzens, die über eine Signalverbindung mit der Hydraulikeinrichtung bzw. einer Hydrauliksteuereinheit verbunden ist.

Bestandteil der Einrichtung zum Erfassen der Größe des Gewindeeingriffs ist erfindungsgemäß ein an der Wechselbuchse befestigtes Sensorelement, welches der Stirnfläche des Gewindebolzens mit axialem Abstand, also berührungslos, gegenüberliegt. Von Vorteil ist, dass das Sensorelement in keinem Betriebszustand mit dem Gewindebolzen in Kontakt steht. Somit werden mechanische Beanspruchungen des Sensorelements durch Schlag- oder Stoßbelastungen vermieden. Durch die positionsfeste Anordnung des Sensorelements an der Wechselbuchse ist bei bekannter Position des Sensors, bekanntem Abstand zwischen Sensor und dem unteren Ende der Wechselbuchse sowie aufgrund des gemessenen Abstands die Länge des Gewindeeingriffs direkt und präzise ermittelbar.

Das Sensorelement kann ein optischer, akustischer, magnetischer, elektrischer, elektromagnetischer, optoelektrischer, induktiver, niederfrequenter oder hochfrequenter Sensor sein. Auch eine Kombination von einem oder mehreren der genannten Sensorelemente mit anderen Messmethoden, beispielsweise einer mechanischen Kontaktmessung, ist vorstellbar. Zum Beispiel kann die aus dem Stand der Technik bekannte Kontaktmessung über mit dem Bolzen in Verbindung stehende Messstifte mit einer kontaktlosen Messung kombiniert werden. In einem solchen Aufbau wären der Messstift und der kontaktlose Sensor benachbart. Solch eine Konstruktion würde es erlauben, den Gewindeeingriff und die Zugspannung simultan zu messen.

Vorteilhaft und konstruktionstechnisch einfacher ist aber eine kontaktfreie Messanordnung. Die genannten Sensorelemente ermöglichen eine kontaktlose und hochpräzise Messung des Abstandes zwischen der Stirnfläche des Gewindebolzens und dem Sensor. Da der Abstand zwischen dem unteren Ende der Wechselbuchse und dem Sensorelement ein feststehender Wert ist, kann durch Subtraktion des gemessenen Abstandes der Gewindeeingriff, also die Länge des Eingriffs der Wechselbuchse mit dem Gewindebolzen, berechnet werden.

In einer bevorzugten Ausgestaltung der Erfindung ist das Sensorelement an einer der Stirnfläche des Gewindebolzens axial gegenüberliegenden Innenseite der Wechselbuchse angeordnet. Dadurch sind die Ortskoordinaten des Sensorelements eindeutig und stets festgelegt. Der Abstand zwischen Sensorelement und der Stirnfläche des Gewindebolzens kann präzise und ohne mechanische Beanspruchung des Sensorelements gemessen werden.

Von Vorteil ist, wenn das Sensorelement über eine Signalverbindung mit einer Hydrauliksteuereinheit der Hydraulikeinrichtung verbunden ist. Dadurch kann der von dem Sensorelement ermittelte bzw. erfasste Abstand (oder ein dem Abstand proportionaler Messwert) an die Hydrauliksteuereinheit weitergeleitet werden. Dies erlaubt eine Abstimmung von durch die Hydrauliksteuereinheit der Hydraulikeinrichtung abgegebenen Befehlen mit den vom Sensorelement erfassten Werten. Somit ist es möglich, dass die Hydraulikeinrichtung mit dem Sensorelement über die Signalverbindung kommuniziert, und beide Bauteile in ihrem Zusammenwirken optimiert werden. Eine funktionelle Kopplung beider Bauteile ist gewährleistet.

In einer weiteren Ausgestaltung der Erfindung ist das Sensorelement über eine drahtlose Signalverbindung mit der Hydrauliksteuereinheit der Hydraulikeinrichtung verbunden. Dies ermöglicht die kontaktlose Datenübermittlung an die Hydrauliksteuereinheit. Dadurch wird der Bauteilaufwand verringert und die Konstruktion vereinfacht.

Alternativ ist das Sensorelement über ein Signalkabel mit der Hydrauliksteuereinheit der Hydraulikeinrichtung verbunden. Das Kabel ist entlang eines in der Wechselbuchse verlaufenden Längskanals geführt und übermittelt die von dem Sensorelement erfassten Daten an die Hydrauliksteuereinheit. Auch in dieser Ausgestaltung kann auf den unmittelbaren Kontakt zwischen Sensorelement und Gewindebolzen verzichtet werden, was vorteilhaft für die Beständigkeit des Sensorelements ist. Auch in einer solchen Ausführungsform ist das Sensorelement fest mit der Wechselbuchse verbunden.

Der das Kabel aufnehmende Längskanal kann entweder auf der Mittelachse der Wechselbuchse angeordnet sein, oder versetzt zu dieser Mittelachse.

In einer weiteren vorteilhaften Ausgestaltung der Erfindung ist die Hydrauliksteuereinheit derart ausgebildet, dass die Hydraulikeinrichtung erst ab einer gewissen Mindest-Gewindeeingriffslänge freigegeben wird, Druck aufzubauen. Somit wird erst ab einem vom Anwender oder automatisch vorgegebenen Wert für die Mindest-Gewindeeingriffslänge ermöglicht, hydraulisches Fluid in die Kolben-Zylindereinheit zu pumpen und die Wechselbuchse unter Zugkraft zu setzen. Eine solche Einrichtung dient insbesondere der Sicherheit bzw. sie vermindert das Risiko des Ausbrechens oder Abrutschens der Wechselbuchse von dem Gewindebolzen bei zu geringem Gewindeeingriff. Zudem vereinfacht eine solche Konstruktion den Betrieb der Spannvorrichtung derart, dass sie eine vollautomatische Betriebsweise der Spannvorrichtung ohne aktives menschliches Zutun ermöglicht. Die Hydraulikeinrichtung wird in Abhängigkeit des tatsächlich vorliegenden Gewindeeingriffs gesteuert. Daraus ergibt sich eine erhöhte Betriebssicherheit. Denn menschliche Messfehler werden nahezu ausgeschlossen.

In einer weiteren vorteilhaften Ausgestaltung der Erfindung ist das Sensorelement an einem Sensorgehäuse angeordnet, welches wiederum mit einem Gewindeansatz versehen ist. Dieser Gewindeansatz ist in einer dazu korrespondierenden Gewindeaufnahme der Wechselbuchse verschraubt. So können das Sensorelement bzw. das an dem Sensorgehäuse befestigte Sensorelement in einfacher Weise sicher mit der Wechselbuchse verbunden werden. Auch diese Ausgestaltung vereinfacht die erfindungsgemäße Konstruktion und erhöht gleichzeitig die Betriebssicherheit.

Vorteilhaft ist es zudem, wenn die Hydrauliksteuereinheit mit optischen Anzeigemitteln versehen ist. Diese zeigen zum Beispiel den gemessenen Gewindeeingriff sowie die Mindest-Gewindeeingriffslänge an. Alternativ oder ergänzend kann angezeigt oder akustisch signalisiert werden, ob der erreichte Gewindeeingriff ausreichend ist.

Auch andere Parameter, wie beispielsweise die Zugspannung als Ist- und Sollwert oder der hydraulische Druck können mit Hilfe der optischen Mittel dargestellt werden. Dadurch wird es dem Anwender der erfindungsgemäßen Spannvorrichtung ermöglicht, die von der Hydrauliksteuereinheit ausgegebenen Signal- bzw. Messwerte zu erkennen, diese gegebenenfalls zu korrigieren und den Betrieb der Spannvorrichtung darüber zu steuern. Jedoch ist auch eine automatische Erfassung, Korrektur und Steuerung möglich.

In einer weiteren Ausgestaltung der Erfindung kann neben dem an der Wechselbuchse befestigten Sensorelement ein mit der Stirnfläche des Gewindebolzens in Kontakt stehender, in Längsrichtung der Wechselbuchse axial beweglicher Messstift angeordnet sein. Dieser kann in einem längs der Wechselbuchse verlaufenden Kanal angeordnet sein, wobei die Wechselbuchse und der Messstift relativ zueinander verschieblich sind. Über den Messstift kann die Zugspannung und/oder die Größe des Gewindeeingriffs gemessen oder kontrolliert werden.

Weitere Einzelheiten und Vorteile der Erfindung ergeben sich aus der nachfolgenden Beschreibung der zugehörigen Zeichnungen, in denen Ausführungsbeispiele der erfindungsgemäßen Spannvorrichtung dargestellt sind. In den Zeichnungen zeigen:
- Fig. 1: in vereinfachter Schnittdarstellung eine Spannvorrichtung zum Dehnen eines Gewindebolzens, welche in Fluchtung zu dem Gewindebolzen ansetzt und sich gegen ein Widerlager abstützt;
- Fig. 2: eine zweite Ausführungsform einer Spannvorrichtung zum Dehnen eines Gewindebolzens in der gleichen Montagesituation wie nach Fig. 1;
- Fig. 3: dieselbe Spannvorrichtung nach den Ausführungsformen aus Fig. 1 oder 2 in einer Montagesituation kurz vor dem vollständigen Aufsetzen der Spannvorrichtung auf den Gewindebolzen.

Die erfindungsgemäße Spannvorrichtung wird zum Anziehen, dem Nachziehen oder auch dem Lösen von Schraubverbindungen verwendet, insbesondere von Schraubverbindungen, bei welchen ein Gewindebolzen 7 mit einer Mutter 9 gegen ein anderes Maschinenteil 21 verspannt ist.

Im Betrieb kann die Spannvorrichtung eine Vorspannkraft auf den Gewindebolzen 7 ausüben. Synonym wird dies als Zug am Gewindebolzen 7 oder als Dehnen des Gewindebolzens 7 bezeichnet. Während dieser Vorspannung kann die auf den Gewindebolzen 7 aufgeschraubte Mutter 9 angezogen, nachgezogen oder gegebenenfalls auch gelöst werden.

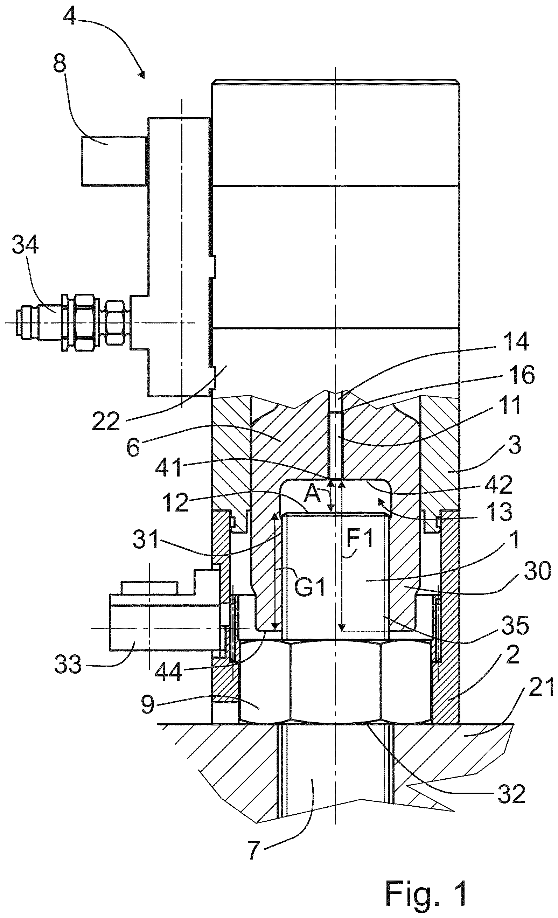

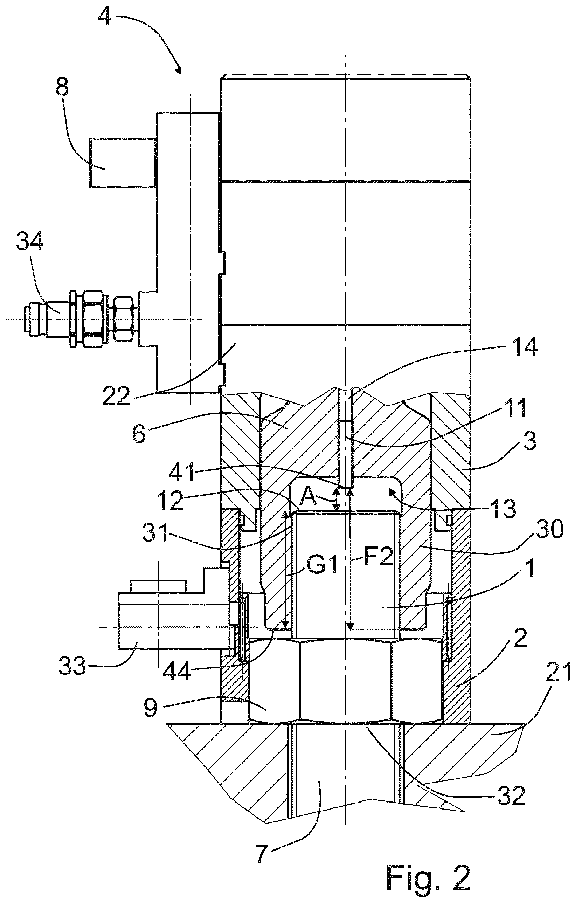

In den Figuren 1 und 2 ist eine erfindungsgemäße Spannvorrichtung in zwei verschiedenen Ausführungsformen in Montageposition gezeigt. Beide Ausführungsformen stimmen in ihren wesentlichen Bestandteilen überein.

Zentrales Bauteil der Spannvorrichtung ist eine teils von einem Stützrohr 2 und teils von einem Zylinder 3 umgebene Wechselbuchse 6. An ihrem einen Ende ist die Wechselbuchse 6 in Richtung des Gewindebolzens 7 zumindest teilweise offen bzw. hülsenartig gestaltet. Der hülsenartige Abschnitt 30 der Wechselbuchse 6 ist innen mit einem Innengewinde 31 versehen.

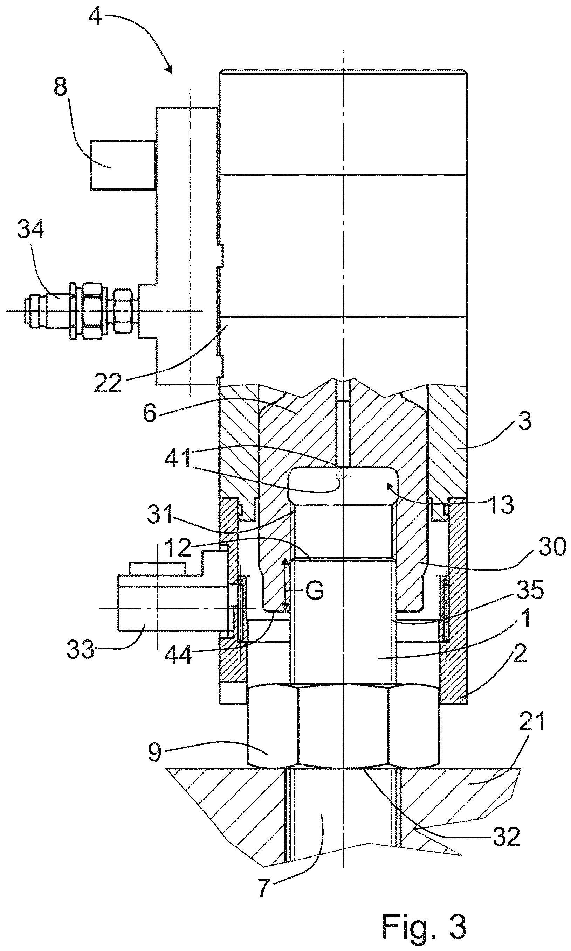

Die Spannvorrichtung wird vor Beginn des Dehn- bzw. Vorspannprozesses auf einen über die Mutter 9 hinausragenden Gewindeendabschnitt 1 des Gewindebolzens 7 aufgesetzt. In der Fig. 3 ist eine solche Situation kurz vor dem vollständigen Aufsetzen der Spannvorrichtung dargestellt. Dabei wird nicht nur die Wechselbuchse 6 auf den Gewindebolzen 7 aufgesetzt, sondern auch das die Wechselbuchse 6 umgebende Zylindergehäuse 22 bzw. Stützrohr 2.

Das Zylindergehäuse 22 umschließt einen oder mehrere Zylinder samt einem oder mehreren innerhalb des Zylinders axial beweglicher Kolben (nicht dargestellt). Der oder die Kolben sind derart, dass die Wechselbuchse 6 von mindestens einem Kolben axial mitgenommen wird.

Das Zylindergehäuse 22 kann sich aus mehreren in vertikaler Fluchtung zueinander angeordneten Zylinderabschnitten zusammensetzen. In Richtung der Mutter 9 setzt sich das Zylindergehäuse 22 mit einem die Mutter 9 umgebenden Stützrohr 2 fort. Das Stützrohr 2 kann einstückiger Bestandteil des Zylindergehäuses 22 sein oder ist am Zylindergehäuse 22 mit bekannten Mitteln befestigt. Das Stützrohr 2 ist, wie auch die von dem Stützrohr 2 umgebende Wechselbuchse 6, an der Unterseite offen.

In den Montagepositionen nach Fig. 1 und 2, also in Betriebsposition zum Anziehen des Gewindebolzens 7, stützt sich das Stützrohr 2 gegen die die Mutter 9 umgebende Gegenfläche ab. Eine solche Gegenfläche kann beispielsweise ein Maschinenteil 21 sein. Die Gegenfläche dient beim Dehnen des Gewindebolzens 7 als Widerlager für die Spannvorrichtung. Gegen diese Gegenfläche stützt sich zudem die anzuziehende Mutter 9 mit ihrer Unterseite 32 ab.

Außerdem kann ein durch eine seitliche Öffnung des Stützrohrs 2 hindurch arbeitendes Getriebe 33 vorhanden sein, mit dem sich die Mutter 9 drehen, also nachziehen lässt. Dieses Drehen ist allerdings nur in jenem Zustand möglich, bei welchem der Gewindebolzen 7 unter Zug steht und so die Mutter 9 entlastet ist.

Außerhalb des Zylindergehäuses 22 befindet sich eine Hydraulikeinrichtung 4. Über diese können ein oder mehrere Hohlräume innerhalb eines mindestens einen Kolben axial beweglich führenden Zylinders 3 mit unter hohem Druck stehenden Hydraulikfluid gefüllt bzw. versorgt werden. Die Hydraulikeinrichtung 4 ist über ein Ventil 34 mit einer externen Hydraulikversorgung verbunden.

Beim Aufsetzen der Spannvorrichtung auf den Gewindebolzen 7 greift das Innengewinde 31 des hülsenartigen Abschnitts 30 der Wechselbuchse 6 in das Außengewinde 35 des Gewindeendabschnitts 1 des Gewindebolzens 7 ein. Die Wechselbuchse 6 ist hierzu auf den Gewindebolzen 7 aufgeschraubt, bis der gewünschte Gewindeeingriff G bzw. Mindest-Gewindeeingriff G1 zwischen dem Innengewinde 31 der Wechselbuchse 6 und dem Außengewinde 35 des Gewindebolzens 7 erreicht ist.

Durch Zuführen von hydraulischem Fluid durch die Hydraulikeinrichtung 4 in den mindestens einen Hohlraum des Zylinders 3 wird der Kolben angehoben. Dieser nimmt dabei die Wechselbuchse 6 axial mit. Durch den Gewindeeingriff G zwischen Wechselbuchse 6 und Gewindebolzen 7 wird die Zugkraft auf den Gewindebolzen 7 übertragen, und dieser axial vorgespannt bzw. gedehnt. Danach kann die Mutter 9 annähernd widerstandsfrei nachgezogen werden.

In der Ausführungsform nach Fig. 1 ist die Spannvorrichtung zusätzlich mit einer Einrichtung zum Erfassen der Länge des Gewindeeingriffs G zwischen der Wechselbuchse 6 und dem Gewindeendabschnitt 1 des Gewindebolzens 7 versehen. Zu dieser Einrichtung gehört ein an der Wechselbuchse 6 befestigtes Sensorelement 11. Das Sensorelement 11 steht nicht in Kontakt mit der Stirnfläche 12 des Gewindebolzens 7, liegt diesem also in jeder Betriebssituation mit Abstand berührungslos gegenüber.

Das Sensorelement 11 ist innen an der nach unten offenen Wechselbuchse 6, also innerhalb des hülsenartigen Abschnitts 30 der Wechselbuchse 6, angeordnet. Bevorzugt ist hierbei eine Anordnung in Fluchtung zu der Stirnfläche 12 des Gewindebolzens 7. In diesem Fall liegen sich das Sensorelement 11 und die Stirnfläche des Gewindebolzens 7 unmittelbar gegenüber.

In einer bevorzugten Ausgestaltung ist das Sensorelement 11 in einem in der Wechselbuchse 6 verlaufenden Längskanal 14 angeordnet. Dieser befindet sich hier genau auf der Mittelachse der Wechselbuchse, kann aber auch versetzt angeordnet sein.

Das Sensorelement 11 schließt den Längskanal 14 nach unten, in Richtung des Gewindebolzens 7, ab. Die Unterseite 41 des Sensorelements 11 ist hier bündig mit der der Stirnfläche 12 des Gewindebolzens 7 gegenüberliegenden Stirnfläche 42 der Wechselbuchse 6.

Das Sensorelement 11 ist dazu ausgelegt, den Abstand A des Sensorelements 11 zur Stirnfläche 12 des Gewindebolzens 7 zu sensieren oder zu messen. Hierzu kann das Sensorelement 11 ein optischer, akustischer, magnetischer, elektrischer, elektromagnetischer, optoelektrischer, induktiver, niederfrequenter oder hochfrequenter Sensor sein. Auch andere für berührungslose Abstandsmessungen geeignete Sensoren können als Sensorelement 11 verwendet werden. Zudem ist es möglich, mehrere Sensoren zu kombinieren. So können mehrere Sensorelemente 11 eines Sensortyps parallel angeordnet sein. Dies kann beispielsweise die Fehlertoleranz der Messung reduzieren.

Die von dem mindestens einen Sensorelement 11 erfassten Abstandswerte A werden signaltechnisch an eine Hydrauliksteuereinheit 8 der Hydraulikeinrichtung 4 weitergeleitet. Dazu kann das Sensorelement 11 mit einem Kabel verbunden sein, welches in dem Längskanal 14 bis in den oberen Teil der Spannvorrichtung verläuft, und außerhalb der Spannvorrichtung bis zu der Hydrauliksteuereinheit 8 bzw. zu der Hydraulikeinrichtung weitergeführt ist. Über das Kabel werden die gemessenen Abstandswerte A signaltechnisch an die Hydrauliksteuereinheit 8 weitergeleitet.

Auch ist vorstellbar, dass signaltechnische Informationen, insbesondere Befehle zum Steuern des Sensorelements 11 von der Hydrauliksteuereinheit 8 funktechnisch an das Sensorelement 11 gesendet und von dem Sensorelement 11 empfangen werden. Das Sensorelement 11 sowie die Hydrauliksteuereinheit 8 agieren signaltechnisch sowohl im Empfangs- als auch im Sendemodus.

Das Senden und Empfangen der Signale bzw. die signaltechnische Kommunikation zwischen Sensorelement 11 und Hydrauliksteuereinheit 8 kann auch kabelfrei über die aus dem Stand der Technik bekannten kabellosen Übertragungswege erfolgen. Beispielsweise kann die signaltechnische Kommunikation über Funk, WLAN, Bluetooth oder über elektromagnetische Systeme wie Transponder erfolgen.

Aus dem gemessenen Abstand A zwischen Sensorelement 11 und der Stirnfläche 12 des Gewindebolzens 7 kann der Gewindeeingriff G zwischen Wechselbuchse 6 und Gewindebolzen 7 berechnet werden.

Hierzu muss der Abstand F1 zwischen der Unterseite 41 des Sensorelements 11 und dem unteren Ende 44 der Wechselbuchse 6 bekannt sein. Dieser ergibt sich aus der positionsfesten Anordnung des Sensorelements 11 und den Größenverhältnissen der Spannvorrichtung bzw. der Wechselbuchse 6. Der Wert kann also als gerätespezifischer Wert nach der Montage des Sensorelements 11 in eine signaltechnische Auswerteeinheit bzw. Datenverarbeitungseinheit der Hydrauliksteuereinheit 8 als feststehende Variable F1 eingegeben werden. Selbstverständlich kann die Variable F1 bei Austausch des Sensorelements 11 angepasst werden.

Der Gewindeeingriff G zwischen Wechselbuchse 6 und Gewindebolzen 7 ergibt sich aus der Subtraktion des gemessenen Abstandes A zwischen Sensorelement 11 und der Stirnfläche 12 des Gewindebolzens 7 von dem Abstandswert F1 zwischen Sensorelement 11 und dem unteren Ende 44 der Wechselbuchse 6. Der Gewindeeingriff G ergibt sich also aus G = F1 - A.

Die Spannvorrichtung ist derart ausgebildet, dass die Hydraulikeinrichtung 4 erst ab einem vom Nutzer oder vom Hersteller vorgegebenen Mindest-Gewindeeingriff G1 freigegeben wird. Ist dieser nicht vorhanden, blockiert sie. Also nur für Werte des Gewindeeingriffs G > G1 gibt die Hydrauliksteuereinheit 8 die Hydraulikeinrichtung 4 frei.

Nur wenn der Gewindeeingriff G ausreichend groß ist, ist es daher möglich, hydraulisches Fluid in den mindestens einen Hohlraum des mindestens einen Zylinders 3 zu pumpen. Somit kommt es auch nur ab einem Mindest-Gewindeeingriff G1 zu einem Dehnen des Gewindebolzens 7.

In der Ausführungsform nach Figur 2 ist das Sensorelement 11 in Bezug auf die Stirnfläche 42 der Wechselbuchse 6 bzw. den durch die Wechselbuchse 6 verlaufenden Kanal 14 in Richtung des Gewindebolzens 7 vorstehend angeordnet. Daraus ergibt sich ein von dem Abstandswert F1 zwischen dem Sensorelement 11 und der Stirnfläche 42 der Wechselbuchse 6 aus der ersten Ausführungsform abweichender Abstandswert F2. Denn das Sensorelement 11 befindet sich zwar beabstandet zum Gewindebolzen 7, ist diesem aber räumlich näher als in der ersten Ausführungsform. Der Gewindeeingriff G berechnet sich aus dem Abstandswert F2 und dem gemessenen Abstand A nach G = F2 - A.

Die Hydrauliksteuereinheit 8 ist weiterhin mit optischen Mitteln zur Datenanzeige und Dateneingabe versehen. Diese sind mit der Elektronik der Spannvorrichtung verbunden. Dies erlaubt es dem Anwender der Spannvorrichtung, bestimmte für die Berechnung des Gewindeeingriffs G oder der Vorspannung benötigte Werte per Dateneingabe vorzugeben. Solche Werte können die Abstandswerte F1, F2, die Soll-Vorspannung oder jegliche weiteren Parameter sein. Die Werte können über die optischen Mittel oder andere Mittel zur Datenanzeige bzw. Dateneingabe an die Hydrauliksteuereinheit 8 weitergegeben werden. Hierzu können die optischen Mittel in Form eines Touchscreens oder einer Datenanzeige mit separater Tasteneingabe versehen sein.

Zudem zeigen die optischen Mittel alle relevanten Parameter bzw. Messwerte an, die für eine sichere Bedienung der Spannvorrichtung von Bedeutung sind. So zeigen die optischen Mittel zum Beispiel den aktuellen Gewindeeingriff G und die Mindest-Gewindeeingriffslänge G1 an. Oder es wird optisch angezeigt, ob der erreichte Gewindeeingriff ausreicht, oder nicht. Die Anzeige muss aber nicht auf solche Parameter beschränkt sein.

Nach dem Aufsetzen der Spannvorrichtung auf den zu dehnenden Gewindebolzen 7 (Fig. 3), stützt sich das Stützrohr 2 gegen ein Maschinenteil 21 als Widerlager ab (Fig. 1, 2). Die Wechselbuchse 6 wird mit ihrem Innengewinde 31 auf das Außengewinde 35 des zu verspannenden Gewindebolzens 7 aufgeschraubt. Das Aufschrauben kann manuell oder maschinell erfolgen. Das Sensorelement 11 misst kontinuierlich den Abstandswert F1, F2 und gibt diesen an die Hydrauliksteuereinheit 8 weiter. Sobald die geräteintern vorgegebene Mindest-Gewindeeingriffslänge G1 erreicht ist, die den Sicherheitsanforderungen für eine zuverlässige Handhabung entspricht, teilt die Hydrauliksteuereinheit 8 dies dem Nutzer durch optische oder akustische Mittel mit. Dies kann beispielsweise mit einem Signalton oder einem Aufblinken optischer Mittel erfolgen. Erst dann wird durch die Hydrauliksteuereinheit die Hydraulikversorgung freigeschaltet, und erst dann kann der Bediener die Hydraulikversorgung über einen Aktivierungsknopf starten. Alternativ kann die Hydrauliksteuereinheit 8 die Hydraulikversorgung über die Hydraulikeinrichtung 4 automatisch, d. h. ohne manuelle Aktivierung des Nutzers starten.

Nach der Aktivierung wird hydraulisches Fluid in die Hohlräume der Kolben-Zylindereinheit geleitet und die Kolben in vertikaler Richtung verschoben. Diese nehmen die Wechselbuchse 6 mit, wodurch der Gewindebolzen 7 vertikal angezogen bzw. gedehnt wird. Dann kann die Mutter 9 beispielsweise über ein Getriebe 33 oder manuell nachgezogen werden.

Die Spannvorrichtung kann des Weiteren mit einem mit der Stirnfläche 12 des Gewindebolzens 7 in Kontakt stehenden, aus dem Stand der Technik bekannten Messstift verbunden sein. Dieser kann durch den selben Kanal 14 geführt sein, in welchem auch das Sensorelement 11 angeordnet ist. Auch eine Anordnung mit einem zu dem ersten Kanal 14 parallel verlaufender zweiter Kanal zur Führung des Messstifts ist möglich. Der Messstift ist gegenüber der Wechselbuchse 6 axial verschieblich. Der Messstift dient zur Messung der Vorspannung oder als Referenzmethode zur Bestimmung des Gewindeeingriffs G.

### Bezugszeichenliste

- 1: Gewindeendabschnitt
- 2: Stützrohr
- 3: Zylinder
- 4: Hydraulikeinrichtung
- 6: Wechselbuchse
- 7: Gewindebolzen
- 8: Hydrauliksteuereinheit
- 9: Mutter
- 11: Sensorelement
- 12: Stirnfläche
- 13: Innenseite
- 14: Längskanal
- 16: Sensorgehäuse
- 21: Maschinenteil
- 22: Zylindergehäuse
- 30: hülsenartiger Abschnitt
- 31: Innengewinde
- 32: Unterseite
- 33: Getriebe
- 34: Ventil
- 35: Außengewinde
- 41: Unterseite
- 42: Stirnfläche
- 44: unteres Ende

- A: gemessener Abstand
- G: Gewindeeingriff
- G1: Mindest-Gewindeeingriffslänge
- F1: Abstandswert
- F2: Abstandswert

## Patentansprüche

1. Spannvorrichtung zum Dehnen eines Gewindebolzens durch Zug an dessen Gewindeendabschnitt, mit einem den Gewindeendabschnitt (1) umgebenden Stützrohr (2), einem in Verlängerung des Stützrohrs (2) angeordneten Zylinder (3) mit mindestens einem darin axial mittels hydraulischer Kräfte bewegbaren Kolben, einer mit dem Gewindeendabschnitt (1) verschraubbaren, durch den Kolben axial mitnehmbar ausgebildeten Wechselbuchse (6), einer Hydraulikeinrichtung (4) zur hydraulischen Versorgung des Kolbens, und einer Signalverbindung zwischen der Hydraulikeinrichtung (4) und einer Einrichtung zum Erfassen der Größe des Gewindeeingriffs (G) zwischen der Wechselbuchse (6) und dem Gewindeendabschnitt (1), **dadurch gekennzeichnet, dass** die Einrichtung zum Erfassen der Größe des Gewindeeingriffs (G) ein an der Wechselbuchse (6) befestigtes Sensorelement (11) umfasst, welches der Stirnfläche (12) des Gewindebolzens (7) mit axialem Abstand gegenüberliegt.

2. Spannvorrichtung nach Anspruch 1, **dadurch gekennzeichnet, dass** das Sensorelement (11) ein optischer, akustischer, magnetischer, elektrischer, elektromagnetischer, optoelektrischer, induktiver, niederfrequenter oder hochfrequenter Sensor ist.

3. Spannvorrichtung nach einem der Ansprüche 1 und 2, **dadurch gekennzeichnet, dass** das Sensorelement (11) an einer der Stirnfläche (12) des Gewindebolzens (7) gegenüberliegenden Innenseite (13) der Wechselbuchse (6) angeordnet ist.

4. Spannvorrichtung nach einem der vorangehenden Ansprüche, **dadurch gekennzeichnet, dass** das Sensorelement (11) über die Signalverbindung mit einer Hydrauliksteuereinheit (8) der Hydraulikeinrichtung (4) verbunden ist.

5. Spannvorrichtung nach Anspruch 4, **dadurch gekennzeichnet, dass** das Sensorelement (11) über eine drahtlose oder eine kabelgebundene Signalverbindung mit der Hydrauliksteuereinheit (8) der Hydraulikeinrichtung (4) verbunden ist.

6. Spannvorrichtung nach Anspruch 4, **dadurch gekennzeichnet, dass** das Sensorelement (11) über ein durch einen Längskanal (14) der Wechselbuchse (6) verlaufendes Signalkabel mit der Hydrauliksteuereinheit (8) verbunden ist.

7. Spannvorrichtung nach einem der Ansprüche 4 bis 6, **dadurch gekennzeichnet, dass** die Hydrauliksteuereinheit (8) ausgebildet ist, erst ab einer Mindest-Gewindeeingriffslänge (G1) die Hydraulikeinrichtung (4) freizugeben.

8. Spannvorrichtung nach einem der vorangehenden Ansprüche, **dadurch gekennzeichnet, dass** das Sensorelement (11) an einem Sensorgehäuse (16) angeordnet ist, welches mit einem Gewindeansatz versehen ist, und mit diesem in einer dazu korrespondierenden Gewindeaufnahme der Wechselbuchse verschraubt ist.

9. Spannvorrichtung nach einem der vorangehenden Ansprüche, **dadurch gekennzeichnet, dass** die Hydraulikeinrichtung (4) mit optischen Mitteln zur Datenanzeige versehen ist.

10. Spannvorrichtung nach Anspruch 9, **dadurch gekennzeichnet, dass** die optischen Mittel den gemessenen Gewindeeingriff (G) sowie einen Mindest-Gewindeeingriff (G1) anzeigen.

11. Spannvorrichtung nach einem der vorangehenden Ansprüche, **dadurch gekennzeichnet, dass** neben dem an der Wechselbuchse (6) befestigten Sensorelement (11) ein mit der Stirnfläche (12) des Gewindebolzens (7) in Kontakt stehender axial beweglicher Messstift angeordnet ist.

12. Spannvorrichtung nach Anspruch 11, **dadurch gekennzeichnet, dass** die Wechselbuchse (6) und der Messstift zueinander axial verschiebbar sind.

## Claims

1. Clamping device for stretching a threaded bolt by pulling on its threaded end portion, comprising a support tube (2) surrounding the threaded end portion (1), a cylinder (3) which is arranged in extension of the support tube (2) with at least one piston which is axially movable therein by means of hydraulic forces, an exchange bushing (6) which can be screwed to the threaded end portion (1) and is designed to be entrained axially by the piston, a hydraulic device (4) for hydraulic supply of the piston, and a signal link between the hydraulic device (4) and a device for detecting the extent of the thread engagement (G) between the exchange bushing (6) and the threaded end portion (1), **characterised in that** the device for detecting the extent of the thread engagement (G) comprises a sensor element (11) which is fastened to the exchange bushing (6) and lies opposite the end face (12) of the threaded bolt (7) with axial spacing.

2. Clamping device according to claim 1, **characterised in that** the sensor element (11) is an optical, acoustic, magnetic, electrical, electromagnetic, optoelectrical, inductive, low-frequency or high-frequency sensor.

3. Clamping device according to one of claims 1 and 2, **characterised in that** the sensor element (11) is arranged on an inner side (13) of the exchange bushing (6) which is opposite the end face (12) of the threaded bolt (7).

4. Clamping device according to one of the preceding claims, **characterised in that** the sensor element (11) is connected to a hydraulic control unit (8) of the hydraulic device (4) via the signal link.

5. Clamping device according to claim 4, **characterised in that** the sensor element (11) is connected to the hydraulic control unit (8) of the hydraulic device (4) via a wireless or a wired signal link.

6. Clamping device according to claim 4, **characterised in that** the sensor element (11) is connected to the hydraulic control unit (8) via a signal cable extending through a longitudinal channel (14) of the exchange bushing (6).

7. Clamping device according to one of claims 4 to 6, **characterised in that** the hydraulic control unit (8) is designed for releasing the hydraulic device (4) only once a minimum thread engagement length (G1) has been reached.

8. Clamping device according to one of the preceding claims, **characterised in that** the sensor element (11) is arranged on a sensor housing (16) which is provided with a threaded projection and, with this threaded projection, is screwed into a corresponding threaded receptacle of the exchange bushing.

9. Clamping device according to one of the preceding claims, **characterised in that** the hydraulic device (4) is provided with visual means for data display.

10. Clamping device according to claim 9, **characterised in that** the visual means display the measured thread engagement (G) and a minimum thread engagement (G1).

11. Clamping device according to one of the preceding claims, **characterised in that** an axially movable measuring pin, which is in contact with the end face (12) of the threaded bolt (7), is arranged adjacent to the sensor element (11) fastened to the exchange bushing (6).

12. Clamping device according to claim 11, **characterised in that** the exchange bushing (6) and the measuring pin are axially displaceable relative to each other.

## Revendications

1. Dispositif de serrage pour l'étirement d'un boulon fileté par traction à sa partie d'extrémité filetée, avec un tube de soutien (2) entourant la partie d'extrémité filetée (1), avec un cylindre (3) disposé dans le prolongement du tube de soutien (2) avec au moins un piston déplaçable axialement dans celui-ci au moyen de forces hydrauliques, avec une douille échangeable (6) pouvant être vissée avec la partie d'extrémité filetée (1) et réalisée d'une façon pouvant être entraînée axialement par le piston, avec un dispositif hydraulique (4) pour l'alimentation hydraulique du piston, et avec une liaison de signalisation entre le dispositif hydraulique (4) et un dispositif pour détecter la grandeur de l'engagement fileté (G) entre la douille échangeable (6) et la partie d'extrémité filetée (1), **caractérisé en ce que** le dispositif pour détecter la grandeur de l'engagement fileté (G) comprend un élément de capteur (11) fixé à la douille échangeable (6), qui est situé en face avec une distance axiale de la face frontale (12) du boulon fileté (7).

2. Dispositif de serrage selon la revendication 1, **caractérisé en ce que** l'élément de capteur (11) est un capteur optique, acoustique, magnétique, électrique, électromagnétique, opto-électrique, inductif, à basse fréquence ou à haute fréquence.

3. Dispositif de serrage selon une des revendications 1 et 2, **caractérisé en ce que** l'élément de capteur (11) est disposé sur un côté intérieur (13) de la douille échangeable (6) opposé à la face frontale (12) du boulon fileté (7).

4. Dispositif de serrage selon l'une quelconque des revendications précédentes, **caractérisé en ce que** l'élément de capteur (11) est relié à une unité de commande hydraulique (8) du dispositif hydraulique (4) au moyen de la liaison de signalisation.

5. Dispositif de serrage selon la revendication 4, **caractérisé en ce que** l'élément de capteur (11) est relié à l'unité de commande hydraulique (8) du dispositif hydraulique (4) par une liaison de signalisation sans fil ou par câble.

6. Dispositif de serrage selon la revendication 4, **caractérisé en ce que** l'élément de capteur (11) est relié à l'unité de commande hydraulique (8) par un câble de signalisation s'étendant à travers un canal longitudinal (14) de la douille échangeable (6).

7. Dispositif de serrage selon l'une quelconque des revendications 4 à 6, **caractérisé en ce que** l'unité de commande hydraulique (8) est configurée pour ne libérer le dispositif hydraulique (4) qu'à partir d'une longueur minimale de l'engagement fileté (G1).

8. Dispositif de serrage selon l'une quelconque des revendications précédentes, **caractérisé en ce que** l'élément de capteur (11) est disposé sur un boîtier de capteur (16), qui est pourvu d'un bout fileté, et qui est vissé avec celui-ci dans un logement fileté lui correspondant de la douille échangeable.

9. Dispositif de serrage selon l'une quelconque des revendications précédentes, **caractérisé en ce que** le dispositif hydraulique (4) est muni de moyens optiques pour l'affichage de données.

10. Dispositif de serrage selon la revendication 9, **caractérisé en ce que** les moyens optiques affichent l'engagement fileté mesuré (G) ainsi qu'un engagement fileté minimal (G1).

11. Dispositif de serrage selon l'une quelconque des revendications précédentes, **caractérisé en ce qu'**une tige de mesure mobile axialement se trouvant en contact avec la face frontale (12) du boulon fileté (7) est disposée à côté de l'élément de capteur (11) fixé à la douille échangeable (6).

12. Dispositif de serrage selon la revendication 11, **caractérisé en ce que** la douille échangeable (6) et la tige de mesure sont déplaçables axialement l'une par rapport à l'autre.
